# EUROPEAN PATENT APPLICATION

(11) **EP 1 801 643 A1**
(43) Date of publication of application: **27.06.2007**
(21) Application number: 06026289.6
(22) Date of filing: 19.12.2006
(51) Int. Cl.: G02F 1/365, H01S 3/30

(54) **Broad-band light source**

(30) Priority: 20.12.2005 JP 2005366694
(71) Applicant: Sumitomo Electric Industries, Ltd., Osaka-shi, Osaka 541-0041 (JP)
(72) Inventor: Okuno, Toshiaki c/o Yokohama Works of Sumitomo, Yokohama-shi Kanagawa (JP)
(74) Representative: HOFFMANN EITLE

(57) **Abstract**

So far the spectrum of the SC light has been limited to a certain wavelength band. To solve this problem, the invention offers a broad-band light source (1) that can produce broad-band light having a desired wavelength width in a desired wavelength band. The broad-band light source (1) comprises a pulse light source (10), a first optical fiber (30), and a second optical fiber (40). The first optical fiber (30) receives pump pulse light outputted from the pulse light source (10), generates first generated pulse light having a center wavelength different from that of the pump pulse light (10), and outputs remaining pulse light of the pump pulse light and the first generated pulse light. The second optical fiber (40) receives at least the first generated pulse light of the pulse light outputted from the output end of the first optical fiber (30) and produces and outputs broad-band light.

## Description

### BACKGROUND OF THE INVENTION

### Field of the Invention

The present invention relates to a broad-band light source utilizing a nonlinear optical phenomenon in an optical fiber.

### Description of the Background Art

A supercontinuum (SC) light source, which is an example of a broad-band light source, has a feature in that it has a high-power, broad-bancl output with a flat spectrum. Consequently, it has been expected as a light source in various fields. Various structures have been proposed for an SC light source. Of these structures, a structure is simple and convenient in which light (source light) to become a source to obtain SC light is launched into an optical fiber to produce SC light in the optical fiber. This structure can easily increase the length of the interaction. Therefore, it is used widely.

The following light sources are available as a light source for outputting pump light: (a) a light source that outputs short-pulse light having a width of picoseconds or femtoseconds, (b) a light source that outputs pulse light having a relatively broad width of nanoseconds or so, and (c) a light source that outputs continuous light. The typical examples of the short-pulse light source include a titanium-sapphire laser and a fiber laser based on an erbium-doped optical fiber (EDFL). The latter is a light source that lases at a wavelength band of 1,550 nm or so, which is an important wavelength band in the optical communication. Engineers have been intensively developing this light source.

A large number of reports have been published on the production of the SC light. In recent years, engineers have been actively studying the SC light production using a holey fiber, such as a photonic crystal fiber having a zero-dispersion wavelength in the vicinity of the lasing wavelength of the titanium-sapphire laser. In a wavelength band of 1,550 nm, also, the following literatures have reported examples of the more effective obtaining of a broad-band SC light by inputting, as pump light, pulse light from a short-pulse light source or high-power continuous light into a highly nonlinear optical fiber that has a higher nonlinearity than an ordinary degree: (a) the Japanese patent application laid open Tokukaihei 11-160744 and (b) T. Okuno et al. "Wide-band-NIR pulse-laser source utilizing nonlinear effects in optical fibers" Proceedings of the 21st NIR Forum, P-33, November 2005.

In these literatures, the source light has either a fixed wavelength or a variable wavelength with a narrow wavelength range (for example, no broader than 30 nm in the case of a 1,550-nm pulse light source). Consequently, the spectrum of the SC light is limited to a wavelength band that is predetermined to a certain extent. Therefore, it has so far been difficult to achieve the production of SC light having a desired band width in a desired wavelength band.

### SUMMARY OF THE INVENTION

An object of the present invention is to offer a broad-band light source capable of producing broad-band light having a desired wavelength width in a desired wavelength band.

To attain the foregoing object, the present invention offers a broad-band light source provided with a pulse light source, a first optical fiber, and a second optical fiber. The first optical fiber (a) receives pump pulse light outputted from the pulse light source, (b) generates first generated pulse light having a center wavelength different from that of the pump pulse light, and (c) outputs remaining pulse light of the pump pulse light and the first generated pulse light. The second optical fiber (a) receives at least the first generated pulse light of the pulse light outputted from the output end of the first optical fiber and (b) produces and outputs broad-band light.

These and other features, aspects, and advantages of the present invention will become better understood with regard to the following description, appended claims, and accompanying drawings. In the drawing, the same sign is given to the same element to avoid duplicated explanations.

### BRIEF DESCRIPTION OF THE DRAWING

Figure 1 is a schematic diagram showing a broad-band light source in a first embodiment of the present invention and a first example of pulse light guided in the broad-band light source.
Figure 2 is a schematic diagram showing a broad-band light source in the first embodiment of the present invention and a second example of pulse light guided in the broad-band light source.
Figure 3 is a schematic diagram showing a broad-band light source in a second embodiment of the present invention.
Figure 4 is a schematic diagram showing a broad-band light source in a third embodiment of the present invention.
Figure 5 is a schematic diagram showing a broad-band light source in a fourth embodiment of the present invention.
Figure 6 is a schematic diagram showing a broad-band light source in a fifth embodiment of the present invention.
Figures 7A and 7B are graphs showing the dispersion properties of the first and second optical fibers in the broad-band light source in the fifth embodiment.
Figures 8A, 8B, 8C, 9A, 9B, and 9C are schematic diagrams explaining the pulse light guided in the broad-band light source in the fifth embodiment.
Figure 10 is a schematic diagram showing a broad-band light source in a sixth embodiment of the present invention and a first example of pulse light guided in the broad-band light source.
Figure 11 is a graph showing the spectrum of the broad-band light produced in the second optical fiber in two cases, in which in one case, the second optical fiber has a positive chromatic dispersion at the center wavelength of the generated pulse light, and in the other case, the second optical fiber has a negative chromatic dispersion at the center wavelength of the generated pulse light.
Figure 12 is a graph showing an example of the spectrum of broad-band light produced in the second optical fiber when the second optical fiber has a positive chromatic dispersion,
Figure 13 is a graph showing an example of the spectrum of broad-band light produced in the second optical fiber when the second optical fiber has a negative chromatic dispersion.
Figure 14 is a graph showing a comparison between the spectrum of the broad-band light produced in an embodiment of the present invention and the spectrum of the broad-band light produced when the pump pulse light is directly inputted into the second optical fiber.

### DETAILED DESCRIPTION OF THE INVENTION

### (First embodiment)

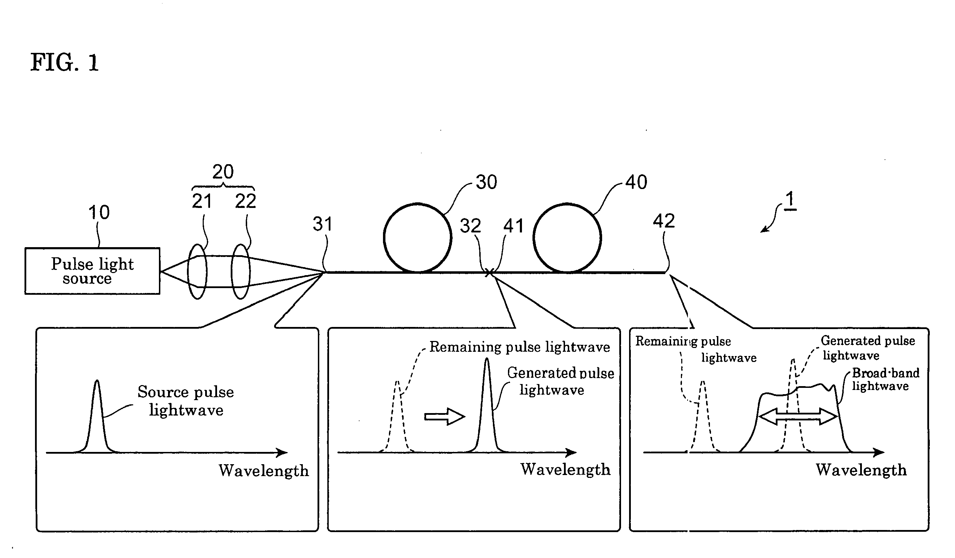

Figure 1 is a schematic diagram showing a broad-band light source 1 in a first embodiment of the present invention and a first example of pulse light guided in the broad-band light source 1. A pulse light source 10 outputs pulse light (pump pulse light). A light-introducing optical system 20 comprises a collimating lens 21 and a focus lens 22. The pump pulse light is launched into an input end 31 of a first optical fiber 30.

The first optical fiber 30 guides the pump pulse light in it to generate pulse light (generated pulse light) having a center wavelength longer than that of the pump pulse light. The first optical fiber 30 outputs, from an output end 32, remaining pulse light of the pump pulse light (remaining pulse light) and the generated pulse light.

The second optical fiber 40 receives at an input end 41 at least the generated pulse light of the pulse light outputted from the output end 32 of the first optical fiber 30 to guide it. The output end 32 of the first optical fiber 30 and the input end 41 of the second optical fiber 40 are spliced by a method such as the fusion splicing. The second optical fiber 40 produces broad-band light based on the inputted pulse light. The broad-band light is outputted from an output end 42.

The pump pulse light has the properties shown in Table I, for example.

**Table I**

| | |
|---|---|
| Center wavelength | 1,550 nm |
| Pulse-repeating frequency | 50 MHz |
| Output power | 70-80 mW |
| Pulse width | 300 fs |

As described above, when the pump pulse light has a center wavelength in the vicinity of 1,550 nm (for example, 1,520 to 1,580 nm), as the pulse light source 10, a low-cost, easily producible apparatus can be used which incorporates, as a light-amplifying medium, an optical fiber or glass or the like all doped with the element erbium. In addition, the value of the dispersion of a highly reliable, silica-based highly nonlinear optical fiber can be easily reduced in the vicinity of this wavelength. As a result, a broad-band light source can be obtained that is low-cost, has a simple structure, and is stable.

The first optical fiber 30 has the properties shown in Table II, for example.

**Table II**

| | |
|---|---|
| Loss at 1.55 µm | 0.5 dB/km |
| Dispersion slope at 1.55 µm | 0.020 ps/nm²/km |
| Effective core area at 1.55 µm | 16 µm² |
| Mode-field diameter at 1.55 µm | 4.6 µm |
| Cutoff wavelength | 1,400 nm |
| Polarization-mode dispersion at 1.55 µm | 0.03 ps/km^{1/2} |
| Length | 50 m |

The absolute value of the dispersion slope of the first optical fiber 30 is less than 0.03 ps/nm²/km at the center wavelength of the pump pulse light. Consequently, the wavelength shift from the pump pulse light to the generated pulse light can be achieved to a longer wavelength range without notably distorting the pulse waveform. On the other hand, when a polarization-maintaining optical fiber is used as the first optical fiber 30, this system can suppress the variation with time in the center wavelength of the pulse that is outputted from the first optical fiber 30. As a result, this system can decrease the variation in the spectral line shape of the broad-band light due to the polarization dependency of the second optical fiber.

The second optical fiber 40 has the properties shown in Table III, for example.

**Table III**

| | |
|---|---|
| Loss at 1.70 µm | 0.8 dB/km |
| Dispersion slope at 1.70 µm | -0.008 ps/nm²/km |
| Effective core area at 1.70 µm | 14 µm² |
| Mode-field diameter at 1.70 µm | 4.3 µm |
| Cutoff wavelength | 1,200 nm |
| Polarization-mode dispersion at 1.70 µm | 0.04 ps/km^{1/2} |
| Length | 50 m |

The absolute value of the dispersion slope of the second optical fiber 40 is less than 0.03 ps/nm²/km at the center wavelength of the generated pulse light. Consequently, the broad-band light can be produced with high efficiency in a broad band.

In addition, when the second optical fiber 40 is designed to have a nonlinearity coefficient of 10 W⁻¹km⁻¹ or more, the second optical fiber 40 can produce broad-band light with a higher efficiency. When the second optical fiber is designed to have a chromatic dispersion whose value is negative at the center wavelength of the generated pulse light, broad-band light having a low level of noise can be produced. When the second optical fiber 40 is designed to have a zero-dispersion wavelength longer than 1,550 nm, in the case where a pulse light source is used that generates pulse light having a wavelength in the vicinity of 1,550 nm (which is adopted in the optical communication and other fields), the wavelength of the generated pulse light generated in the first optical fiber becomes 1,560 nm or more. In this case, when the wavelength of the generated pulse light and the zero-dispersion wavelength of the second optical fiber are predetermined so as to be close to each other, broad-band light can be produced with high efficiency.

It is desirable that the dispersion property or polarization property of the second optical fiber be variable. The control of the value of the dispersion of the second optical fiber enables the optimization of the spectral line shape of the broad-band light and the improvement of the sensitivity of the measuring system. In addition, for an optical fiber having an intense polarization dependency, the same effect can also be expected by varying the polarization property. The varying of the dispersion property and polarization property can be achieved, for example, by treating a coiled second optical fiber by heating and cooling, by applying an external pressure, or by elongating and compressing,

It is desirable that the first optical fiber 30 and the second optical fiber 40 constitute a single length of optical fiber. This structure can avoid a splice loss. Consequently, broad-band light having a higher power can be obtained. In addition, the absence of the spliced portion enables the miniaturization when the optical fiber is wound in coil or forms a module.

In the broad-band light source 1, the pump pulse light undergoes a soliton self-frequency shift in the first optical fiber 30, generating pulse light (generated pulse light) having a center wavelength longer than that of the pump pulse light. The center wavelength of the generated pulse light is longer than that of the pump pulse light by 10 nm or more. The remaining pulse light of the pump pulse light (remaining pulse light) and the generated pulse light are outputted from the output end 32 of the first optical fiber 30.

At this moment, when the chromatic dispersion of the first optical fiber is predetermined to have a positive value at the center wavelength of the pump pulse light, the soliton self-frequency shift can be produced with high efficiency. In particular, when the chromatic dispersion has a value of 2 ps/nm/km or more, the first optical fiber can suppress the production of excessive wavelength components due to the interaction between the pulse lights in the fiber. Consequently, the energy of the pump pulse light can be transferred to the generated pulse light with high efficiency. This enables the improvement of the power of the broad-band light to be outputted from the second optical fiber. As a result, the energy conversion efficiency can be increased, and the noise components in an undesired wavelength band can be suppressed as well.

Of the pulse light outputted from the output end 31 of the first optical fiber 30, at least the generated pulse light is launched into the input end 41 of the second optical fiber 40. While the pulse light launched into the input end 41 is being guided by the second optical fiber 40, broad-band light (SC light) is produced in the second optical fiber 40 based on the inputted pulse light. The broad-band light is outputted from the output end 42 of the second optical fiber 40. The broad-band light has a spectral band width at least two times that of the pump pulse light.

When the broad-band light has a spectral band width at least five times that of the pump pulse light, the following items can be measured with high precision including the breadth of the spectrum: (a) the absorption of methane in the vicinity of a wavelength of 1.6 µm, and (b) the absorption of CO₂ in the vicinity of a wavelength of 2 µm. In addition, when the broad-band light has a spectral band width at least 10 times that of the pump pulse light (which corresponds to the case where the spectrum of subpicosecond pulse light is broadened to the vicinity of 200 nm), not only can the absorption properties of a plurality of substances be observed concurrently including the absorption width but also the spectrum of other substances can be observed in the vicinity of the great absorption property such as the absorption of water.

It is desirable that the broad-band light to be outputted from the output end of the second optical fiber have a spectral intensity of -20 dBm/nm or more. In this case, even in the wavelength band where the sensitivity of a detector is low, the absorption, reflection, and scattering intensities of a substance can be measured sufficiently.

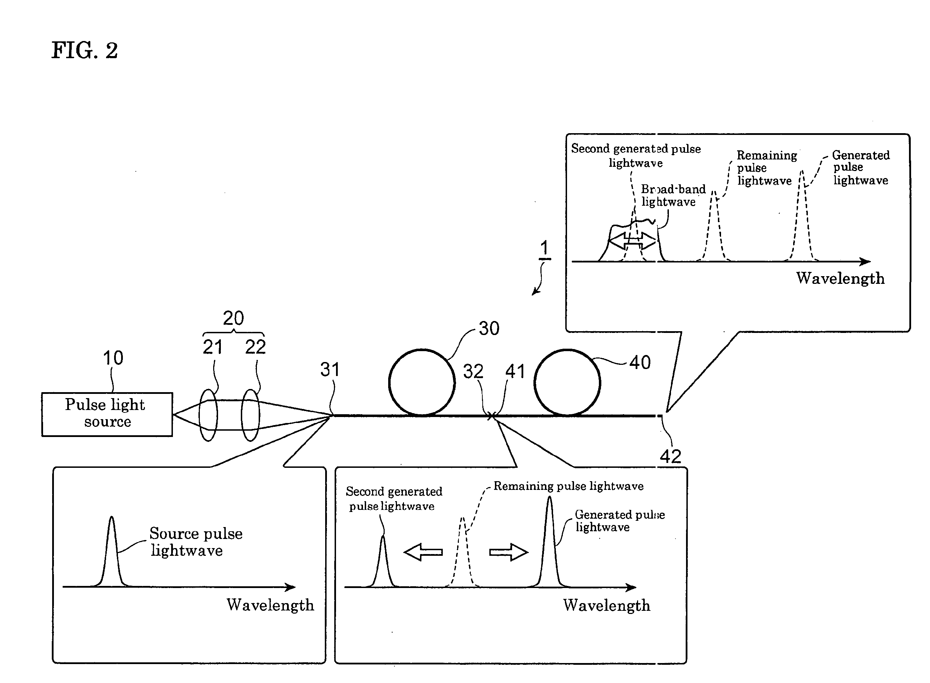

In addition, as shown in Fig. 2, depending on the condition of the first optical fiber 30 and the pump pulse light, at the same time the generated pulse light is generated, other pulse light (second generated pulse light) is sometimes generated that has a center wavelength shorter than that of the pump pulse light. The center wavelength of the second generated pulse light is shorter than that of the pump pulse light by 10 nm or more. The second generated pulse light and the generated pulse light are nearly related as object and mirror image with respect to the pump pulse light. For example, when the generated pulse light shifts to the longer wavelength side, the second generated pulse light behaves in such a way as to shift to the shorter wavelength side. When the second generated pulse light is generated, the second optical fiber may have a zero-dispersion wavelength shorter than 1,550 nm by 10 nm or more, The introduction of the second generated pulse light into the second optical fiber 40 can also generate broad-band light including the center wavelength of the second generated pulse light.

As described above, in the first optical fiber 30, generated pulse light is generated that has a center wavelength shifted to the longer or shorter wavelength side from that of the pump pulse light by 10 nm or more. Subsequently, in the second optical fiber 40 provided at the next stage of the first optical fiber 30, based on the generated pulse light, broad-band light is produced that has a spectral band width at least two times that of the pump pulse light. Consequently, the proper designing and controlling of the wavelength-shifting condition in the first optical fiber 30 and the SC condition in the second optical fiber 40 can produce broad-band light having a desired wavelength width in a desired wavelength band while the waste of energy is suppressed to a minimal degree.

For example, it is desirable that the generated pulse light not only have a wavelength shifted with respect to the pump pulse light but also be subjected to a pulse compression at the same time so that the generated pulse light can have a pulse width narrower than that of the pump pulse light. In this case, the peak power of the broad-band light is effectively increased, and the second optical fiber can produce broad-band light with a higher efficiency.

It is desirable that the center wavelength of the generated pulse light generated in the first optical fiber be variable. In this case, the wavelength band of the broad-band light to be outputted from the second optical fiber can become variable. This enables the adjusting of the spectrum of the broad-band light in accordance with the wavelength property of the object to be measured and the achievement of the high-sensitivity measurement.

It is desirable to be able to shift the center wavelength of the generated pulse light from that of the pump pulse light by 100 nm or more. In general, in a short-pulse light source in a wavelength band of 1,550 nm, the variable range of the wavelength has been limited to no more than 30 nm or so. On the other hand, when the center wavelength of the generated pulse light can be shifted from that of the pump pulse light by 100 nm or more, it becomes possible to easily produce a short-pulse light source in a wavelength range which has so far required a short-pulse light source having a complicated structure that incorporates the wavelength conversion technique to the full extent.

### (Second embodiment)

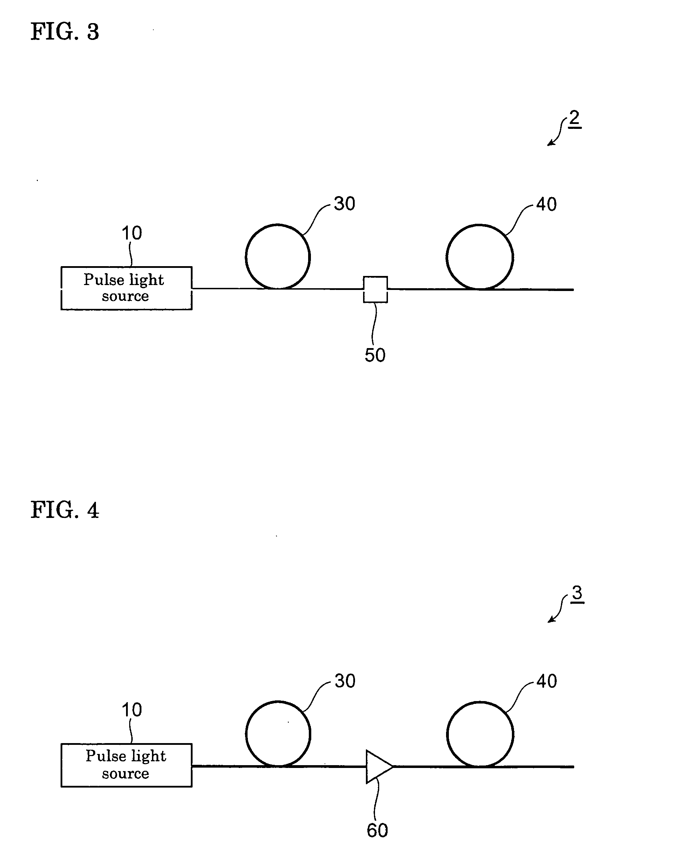

Figure 3 is a schematic diagram showing a broad-band light source in a second embodiment of the present invention. In a broad-band light source 2, the pulse light source 10 has a pigtail optical fiber. The pigtail optical fiber is spliced directly to the first optical fiber 30 with a method such as the fusion splicing. In addition, in the second embodiment, an optical filter 50 is inserted between the first optical fiber30 and the second optical fiber 40.

The first optical fiber 30 outputs, from the output end 32, the generated pulse light and the remaining pulse light. The optical filter 50 blocks the remaining pulse light and selectively transmits the generated pulse light so as to input it into the input end 41 of the second optical fiber 40. Therefore, it becomes possible to produce pure broad-band light according only to the frequency-shifted, generated pulse light.

### (Third embodiment)

Figure 4 is a schematic diagram showing a broad-band light source in a third embodiment of the present invention. In a broad-band light source 3, an optical amplifier 60 is inserted between the first optical fiber 30 and the second optical fiber 40. The optical amplifier 60 optically amplifies the pulse light outputted from the output end 32 of the first optical fiber 30 and inputs the optically amplified pulse light into the input end 41 of the second optical fiber 40. It is desirable that the optical amplifier 60 incorporate, as a light-amplifying medium, an optical fiber or glass or the like all doped with a rare earth element, such as an Er element or a Tm element. The optical amplifier 60 may also be a Raman amplifier. This system increases the peak power of the generated pulse light launched into the input end 41 of the second optical fiber 40. Consequently, it becomes possible not only to increase the power of the broad-band light outputted from the second optical fiber 40 but also to increase the efficiency for producing the broad-band light.

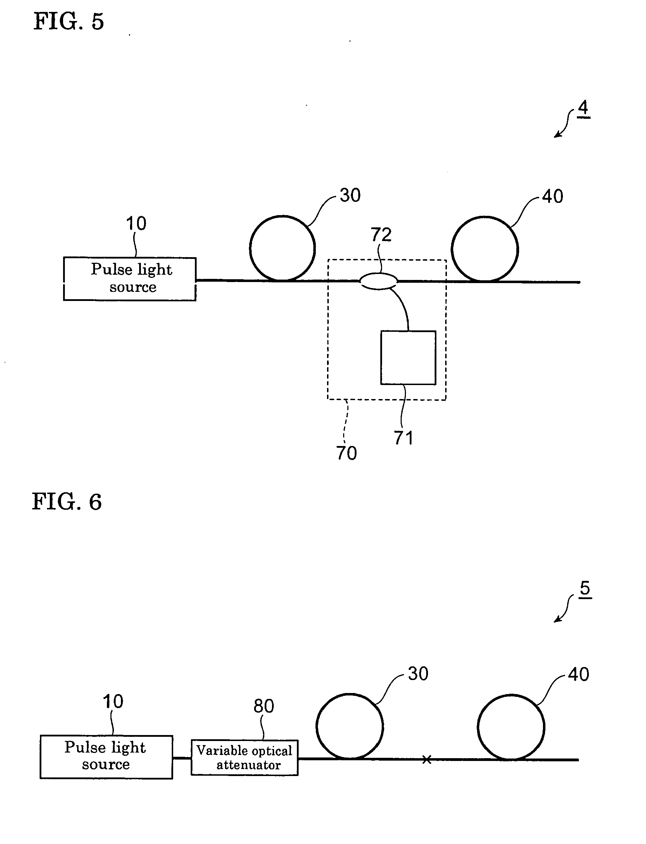

(Fourth embodiment) Figure 5 is a schematic diagram showing a broad-band light source in a fourth embodiment of the present invention. In a broad-band light source 4, a pump-supplying section 70 is inserted between the first optical fiber 30 and the second optical fiber 40. The pump-supplying section 70 comprises a pump source 71 that outputs a pump for Raman-amplifying the pump pulse light in the first optical fiber 30 and an optical coupler 72 that supplies the pump to the first optical fiber 30. The optical coupler 72 receives the pulse light outputted from the output end 32 of the first optical fiber 30 and outputs the pulse light to the input end 41 of the second optical fiber 40. The Raman amplification of the pump pulse light in the first optical fiber 30 enables the increase and control of the magnitude of the wavelength shift of the generated pulse light with respect to the pump pulse light.

### (Fifth embodiment)

Figure 6 is a schematic diagram showing a broad-band light source in a fifth embodiment of the present invention. In a broad-band light source 5, a variable optical attenuator 80 is inserted between the pulse light source 10 and the first optical fiber 30. The variable optical attenuator 80 functions as a controlling means for controlling the power of the pump pulse light to be launched into the input end of the first optical fiber 30. By controlling the power of the pump pulse light, the center wavelength of the generated pulse light is controlled. In the case where the second generated pulse light is generated concurrently, its center wavelength can also be controlled at the same time. As described above, by controlling the power of the pump pulse light to be launched into the input end of the first optical fiber 30, the magnitude of the wavelength shift of the generated pulse light with respect to the pump pulse light can become variable. Thus, a low-cost, high-reliability broad-band light source can be obtained.

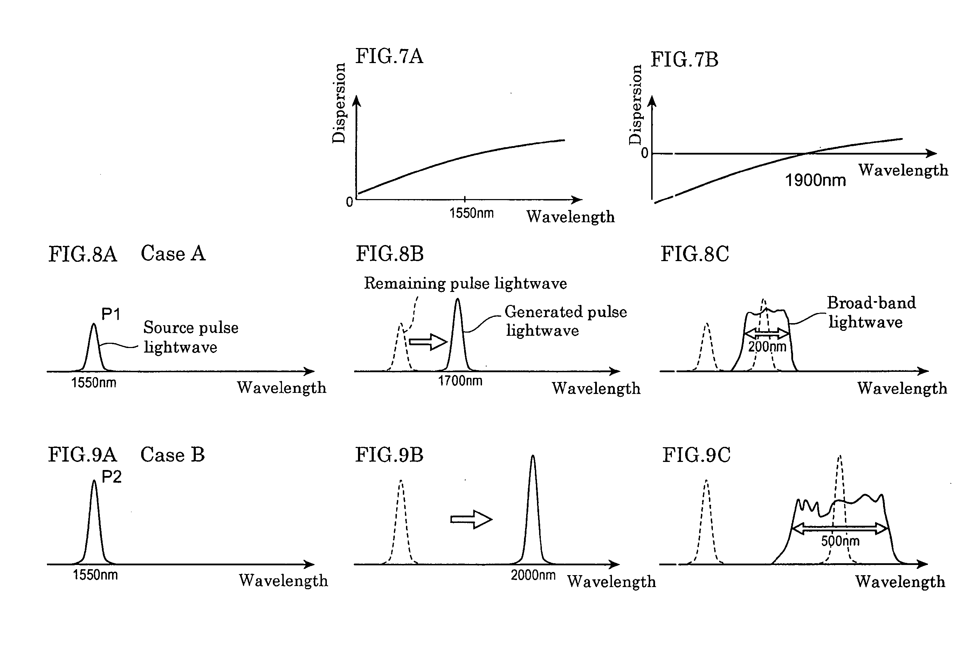

Figures 7A and 7B are graphs showing the dispersion properties of the first and second optical fibers in the broad-band light source in the fifth embodiment. Figures 8A, 8B, 8C, 9A, 9B, and 9C are schematic diagrams explaining the pulse light guided in the broad-band light source in the fifth embodiment. Here, the pump pulse light to be launched into the input end of the first optical fiber 30 is assumed to have a center wavelength of 1,550 nm, and the following two cases are considered: in one case, the pump pulse light has a power of P1 (Fig. 8A), and in the other case, the pump pulse light has a power of P2 (Fig. 9A). In this case, it is assumed that P1 is lower than P2. It is also assumed that the chromatic dispersion property of the first optical fiber 30 is such that the dispersion has a positive value at the wavelength of 1,550 nm and the longer wavelength side (Fig. 7A). When pump pulse light having a power of P1 is inputted into the first optical fiber 30, generated pulse light having a center wavelength of 1,700 nm is generated in the first optical fiber 30 (Fig. 8B). On the other hand, when pump pulse light having a power of P2 is inputted into the first optical fiber 30, generated pulse light having a center wavelength of 2,000 nm is generated in the first optical fiber 30 (Fig. 9B).

It is assumed that the chromatic dispersion property of the second optical fiber 40 is such that the dispersion has a value of zero at a wavelength of 1,900 nm and the dispersion slope is positive (Fig. 7B). When the generated pulse light having a center wavelength of 1,700 nm is inputted into the second optical fiber 40 having the above-described property, broad-band light having a center wavelength of 1,700 nm and a band width of 200 nm is produced in the second optical fiber 40 (Fig. 8C). On the other hand, when the generated pulse light having a center wavelength of 2,000 nm is inputted into the second optical fiber 40, broad-band light having a center wavelength of 2,000 nm and a band width of 500 nm is produced in the second optical fiber 40 (Fig. 9C).

As described above, by controlling the power of the pump pulse light to be launched into the input end of the first optical fiber 30, the magnitude of the wavelength shift of the generated pulse light with respect to the pump pulse light can be varied.

### (Sixth embodiment)

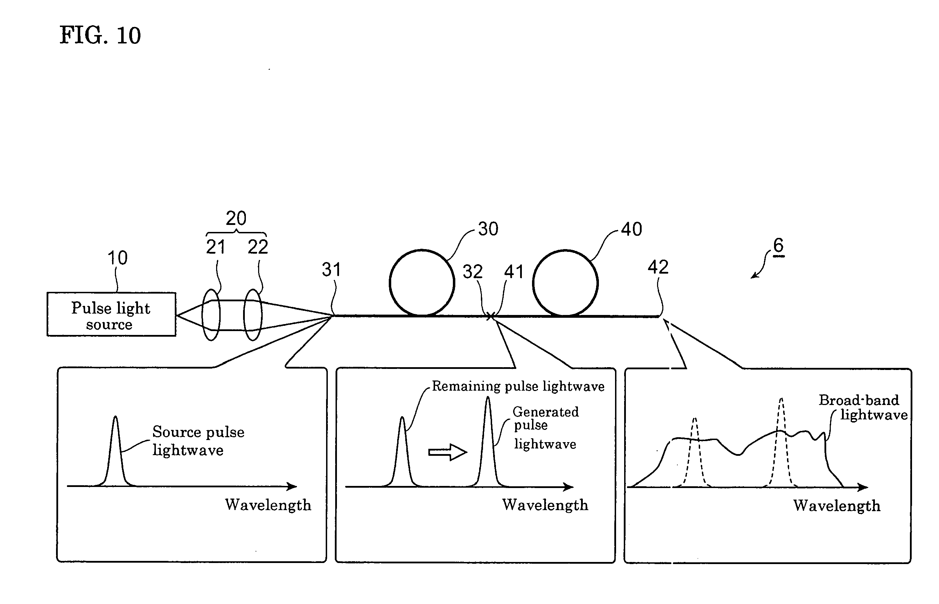

Figure 10 is a schematic diagram showing a broad-band light source in a sixth embodiment of the present invention and a first example of pulse light guided in the broad-band light source. In a broad-band light source 6, both of the generated pulse light and the remaining pulse light outputted from the output end of the first optical fiber 30 are launched into the input end of the second optical fiber 40. In this case, in the second optical fiber 40, not only the generated pulse light but also the remaining pulse light is used effectively. The two-wavelength excitation enables the production of broad-band light having a further broadened band.

In addition, a dispersion compensator or a delay time compensator may be placed between the first optical fiber 30 and the second optical fiber 40 to adjust the timing of each of the generated pulse light and the remaining pulse light so that the broad-band light can be produced effectively in the second optical fiber 40. In this case, it is more desirable that these compensators be a variable type.

### (Other embodiment)

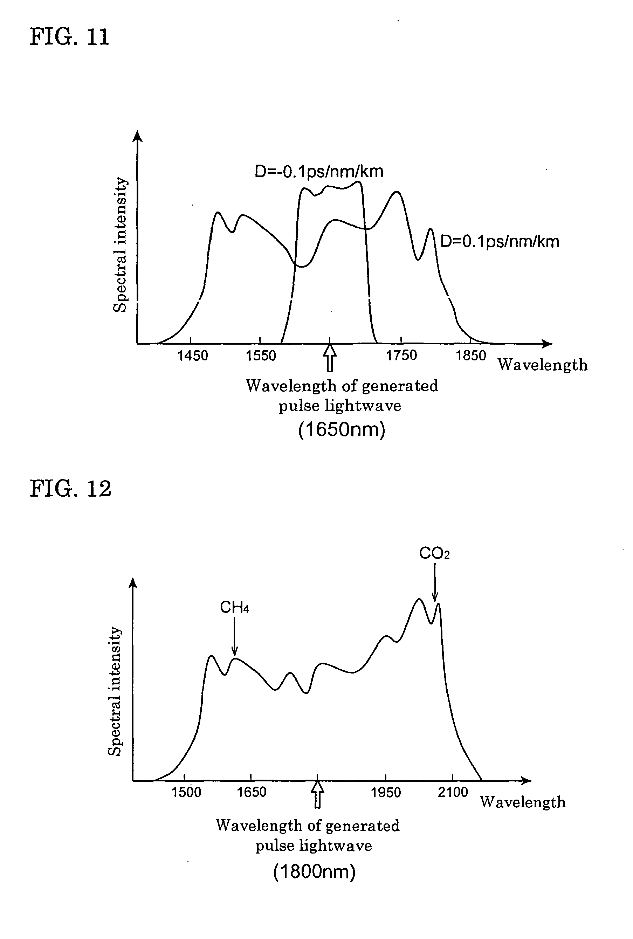

Figure 11 is a graph showing the spectrum of the broad-band light produced in the second optical fiber in two cases, in which in one case, the second optical fiber has a positive chromatic dispersion at the center wavelength of the generated pulse light, and in the other case, the second optical fiber has a negative chromatic dispersion at the center wavelength of the generated pulse light. Here, it is assumed that the generated pulse light has a center wavelength of 1,650 nm and the second optical fiber 40 has a chromatic dispersion, D, of a positive value (+0.1 ps/nm/km) in one case and of a negative value (-0.1 ps/nm/km) in the other case. Table IV shows other properties of the second optical fiber 40.

**Table IV**

| | |
|---|---|
| Fiber loss at 1,650 nm | 0,6 dB/km |
| Dispersion slope at 1,650 nm | 0,020 ps/nm²/km |
| Effective core area at 1,650 nm | 12 µm² |
| Mode-field diameter at 1,650 nm | 3.9 µm |
| Cutoff wavelength | 1,400 nm |
| Polarization-mode dispersion at 1,650 nm | 0.03 ps/km^{1/2} |
| Length | 50 m |

As shown in Fig. 11, when the chromatic dispersion, D, takes a negative value, the band width of the broad-band light produced in the second optical fiber 40 is 100 nm or so. In contrast, when the chromatic dispersion, D, takes a positive value, the band width of the broad-band light produced in the second optical fiber 40 is 300 nm or so.

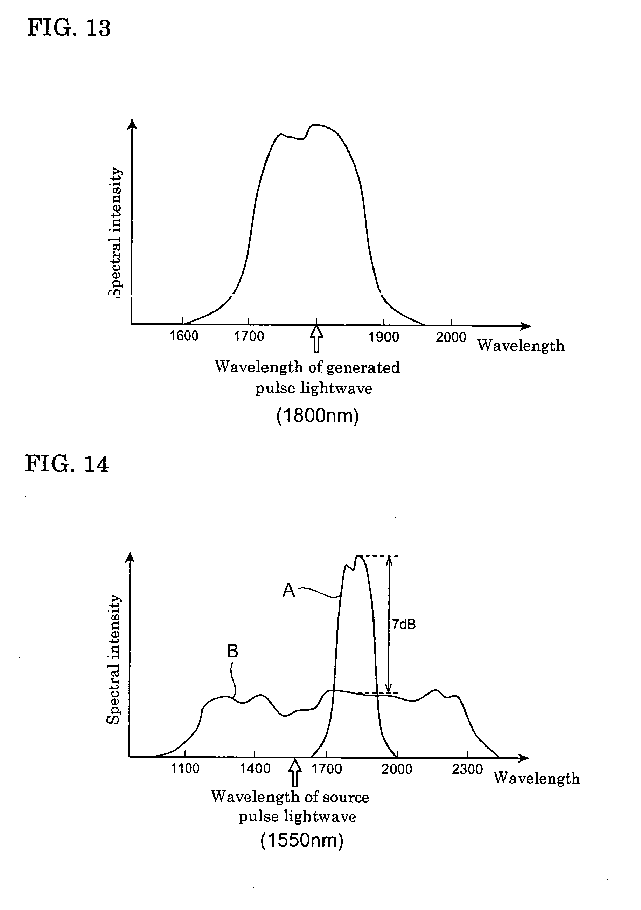

Figure 12 is a graph showing an example of the spectrum of broad-band light produced in the second optical fiber when the second optical fiber has a positive chromatic dispersion. When generated pulse light having a center wavelength of 1,800 nm is inputted into the second optical fiber 40 having a positive dispersion, broad-band light having a center wavelength of 1,800 nm and a band width of 600 nm can be obtained. Such a broad-band light source can be used, for example, as a light source of a measuring apparatus for measuring methane and carbon dioxide at the same time. Figure 13 is a graph showing an example of the spectrum of broad-band light produced in the second optical fiber when the second optical fiber has a negative chromatic dispersion. When generated pulse light having a center wavelength of 1,800 nm is inputted into the second optical fiber 40 having a negative dispersion, broad-band light having a center wavelength of 1,800 nm and a band width of 200 nm can be obtained.

Figure 14 is a graph showing a comparison between the spectrum of the broad-band light produced in an embodiment of the present invention and the spectrum of the broad-band light produced when the pump pulse light is directly inputted into the second optical fiber. In comparison with the case where the pump pulse light having a wavelength of 1,550 nm is directly inputted into the second optical fiber 40 (spectrum B), in the case where generated pulse light generated in the first optical fiber 30 based on the pump pulse light having a wavelength of 1,550 nm is inputted into the second optical fiber 40 (spectrum A), the spectral intensity can be increased by a factor of about five. The wavelength corresponds to the window of the absorption of water in this region. Therefore, this light source is suitable for observing a living body.

The present invention is described above in connection with what is presently considered to be the most practical and preferred embodiments. However, the invention is not limited to the disclosed embodiments, but, on the contrary, is intended to cover various modifications and equivalent arrangements included within the scope of the appended claims.

## Claims

1. A broad-band light source, comprising:
(a) a pulse light source;
(b) a first optical fiber that receives pump pulse light outputted from the pulse light source, generates first generated pulse light having a center wavelength different from that of the pump pulse light, and outputs remaining pulse light of the pump pulse light and the first generated pulse light, and
(c) a second optical fiber that receives at least the first generated pulse light of the pulse light outputted from the first optical fiber and produces and outputs broad-band light.

2. A broad-band light source as defined by claim 1, wherein
the first generated pulse light has a center wavelength selected from the group consisting of a center wavelength longer than that of the pump pulse light by 10 nm or more and a center wavelength shorter than that of the pump pulse light by 10 nm or more and the broad-band light has a spectral band width at least two times that of the pump pulse light.

3. A broad-band light source as defined by claim 2, wherein
the first generated pulse light has a center wavelength longer than that of the pump pulse light by 10 nm or more.

4. A broad-band light source as defined by claim 2, wherein
the first generated pulse light has a center wavelength shorter than that of the pump pulse light and
the first optical fiber generates, in addition to the first generated pulse light, second generated pulse light having a center wavelength longer than that of the pump pulse light and outputs the first generated pulse light, the second generated pulse light, and the remaining pulse light.

5. A broad-band light source as defined by any of the preceding claims, wherein the first optical fiber has a chromatic dispersion whose value is positive at the center wavelength of the pump pulse light.

6. A broad-band light source as defined by claim 2, wherein
the first optical fiber has a chromatic dispersion of 2 ps/mn/km or more at the center wavelength of the pump pulse light.

7. A broad-band light source as defined by any of the preceding claims, wherein the second optical fiber has a nonlinearity coefficient of 10 W⁻¹km⁻¹ or more.

8. A broad-band light source as defined by any of the preceding claims, wherein the first generated pulse light has a pulse width narrower than that of the pump pulse light.

9. A broad-band light source as defined by any of the preceding claims, the broad-band light source further comprising an optical filter that is provided between the first optical fiber and the second optical fiber and selectively transmits the first generated pulse light in a group consisting of the first generated pulse light and the remaining pulse light.

10. A broad-band light source as defined by any of the preceding claims, wherein both of the first generated pulse light and the remaining pulse light are launched into the second optical fiber.

11. A broad-band light source as defined by any of the preceding claims, wherein the pump pulse light has a wavelength in the vicinity of 1,550 nm.

12. A broad-band light source as defined by any of the preceding claims, wherein the first optical fiber is a polarization-maintaining optical fiber.

13. A broad-band light source as defined by any of the preceding claims, wherein the first optical fiber and the second optical fiber form a unified single length of optical fiber.

14. A broad-band light source as defined by any of the preceding claims, the broad-band light source further comprising an optical amplifier that is provided between the first optical fiber and the second optical fiber.

15. A broad-band light source as defined by any of the preceding claims, the broad-band light source further comprising a pump-supplying section for supplying, to the first optical fiber, a pump for Raman-amplifying the pump pulse light in the first optical fiber.

16. A broad-band light source as defined by any of the preceding claims, wherein the first generated pulse light has a center wavelength that is variable.

17. A broad-band light source as defined by claim 16, the broad-band light source further comprising a controlling means for controlling the power of the pump pulse light to be launched into the first optical fiber, so that the center wavelength of the first generated pulse light is controlled by controlling the power of the pump pulse light.

18. A broad-band light source as defined by any of the preceding claims, wherein the second optical fiber has a zero-dispersion wavelength longer than 1,550 nm.

19. A broad-band light source as defined by any of the preceding claims, wherein the second optical fiber has a negative chromatic dispersion at the center wavelength of the first generated pulse light.

20. A broad-band light source as defined by any of the preceding claims, wherein the first optical fiber has a dispersion slope of 0.03 ps/nm²/km or less in absolute value at the center wavelength of the pump pulse light.

21. A broad-band light source as defined by any of the preceding claims, wherein the second optical fiber has a dispersion slope of 0.03 ps/nm²/km or less in absolute value at the center wavelength of the first generated pulse light.

22. A broad-band light source as defined by any of the preceding claims, wherein the broad-band light outputted from the second optical fiber has a spectral intensity of -20 dBm/nm or more.

23. A broad-band light source as defined by any of the preceding claims, wherein the second optical fiber has a dispersion property and a polarization property one of which is variable.
